# EUROPEAN PATENT APPLICATION

(11) **EP 4 711 131 A1**
(43) Date of publication of application: **18.03.2026**
(21) Application number: 24806702.7
(22) Date of filing: 27.06.2024
(51) Int. Cl.: B32B 27/30, B29D 7/01, B32B 9/04

(54) **THERMOSETTING RESIN AND THERMOPLASTIC RESIN COMBINED SHEET MATERIAL**

(30) Priority: 12.05.2023 CN 202310534504
(71) Applicant: Välinge Innovation AB, 263 64 Viken (SE)
(72) Inventor: CHAO, Peitong, Tainan City 709025 (TW)
(74) Representative: Välinge Innovation AB
(86) International application number: PCT/CN2024/101956
(87) International publication number: WO 2024/235354

(57) **Abstract**

The present application discloses a board material comprising a thermosetting resin combined with a thermoplastic resin, which has any one of the following structures: (1) sequentially from bottom to top, a thermoplastic substrate layer, a thermoplastic pattern layer and a thermosetting protective layer, the thermosetting protective layer comprising an abrasion-resistant powder; or (2) sequentially from bottom to top, a thermoplastic substrate layer and a thermosetting full-body layer, the thermosetting full-body layer being obtained by distributing thermosetting resin materials of different colors, the thermosetting full-body layer comprising an abrasion-resistant powder, and the thermoplastic substrate layer having a single color or having a full-body texture.

## Description

### TECHNICAL FIELD

The present application belongs to the technical field of board materials, and specifically relates to a board material comprising a thermosetting resin combined with a thermoplastic resin.

### BACKGROUND ART

Thermosetting resin has a high surface hardness after curing. For example, an existing reinforced floor has a surface which is a scratch-resistant surface layer obtained by attaching melamine-impregnated paper, which is formed by impregnating printed paper with melamine and adding an abrasion-resistant and scratch-resistant material, onto a high-density fiberboard (HDF) or a medium-density fiberboard (MDF) by means of hot pressing at a high temperature. Such an existing reinforced floor is currently the product having the most scratch-resistant surface among film-attached floor products.

Artificial stone products combine a thermosetting unsaturated resin with materials such as quartz sand, and undergo hot pressing, to produce an effect of full-body abrasion resistance and scratch resistance like that of natural rock. However, thermosetting resin involves complex production processes. Moreover, once formed, defective products are not easily recyclable, which often leads to considerable construction waste.

Thermoplastics, such as PVC, PP and PETG among other materials, have good processability. Upon being heated, they are easily formed by a calender or extruder, and after forming and cooling, they can be heated again for recovery and reuse, thereby achieving recycling and greatly contributing to environmental protection. However, the surface of a thermoplastic product is not scratch-resistant, so that the surface is often additionally protected by a UV coating to improve the scratch resistance thereof. Nevertheless, the scratch resistance of UV coatings is far inferior to that of thermosetting resin.

### SUMMARY OF THE INVENTION

The present application aims to solve at least one of the above-identified technical problems in the prior art. To this end, the present application sets forth a board material comprising a thermosetting resin combined with a thermoplastic resin, so that the board material incorporates the advantages of both thermoplastic resin and thermosetting resin. By using a thermoplastic material as a substrate and selecting a thermosetting resin having a similar temperature as a surface layer, the problem of material recovery is solved, and at the same time, the issue of surface scratch resistance is addressed.

According to an aspect of the present application, a board material comprising a thermosetting resin combined with a thermoplastic resin is set forth, the board material having any one of the following structures:
(1) sequentially from bottom to top, a thermoplastic substrate layer, a thermoplastic pattern layer and a thermosetting protective layer, the thermosetting protective layer comprising an abrasion-resistant powder; or
(2) sequentially from bottom to top, a thermoplastic substrate layer and a thermosetting full-body layer, the thermosetting full-body layer being obtained by distributing thermosetting resin materials of different colors, the thermosetting full-body layer comprising an abrasion-resistant powder, and the thermoplastic substrate layer having a single color or having a full-body texture.

In some embodiments of the present application, the raw materials of the thermoplastic substrate layer comprise a thermoplastic resin and a filler, the thermoplastic resin being at least one of PVC, PP, PETG, PET, or TPU. Further, the raw materials of the thermoplastic substrate layer further comprise an auxiliary agent.

In some embodiments of the present application, the filler is stone powder.

In some embodiments of the present application, the thermoplastic substrate layer is a coiled material or a sheet material.

In some embodiments of the present application, the thermoplastic substrate layer is a plain board material or a full-body board material.

In some embodiments of the present application, a main raw material of the thermosetting protective layer and the thermosetting full-body layer is a thermosetting resin, the thermosetting resin being a phenolic resin, a urea-formaldehyde resin, melamine, an unsaturated polyester resin, an epoxy resin, a silicone resin, or polyurethane. Preferably, the thermosetting resin is melamine or an unsaturated polyester resin.

In some embodiments of the present application, the raw materials of the thermosetting protective layer and the thermosetting full-body layer further comprise a curing agent and an auxiliary agent.

In some embodiments of the present application, one or both of a balancing layer or a silencing layer are further provided below the thermoplastic substrate layer. Preferably, the balancing layer may be a thermosetting or thermoplastic material.

In some embodiments of the present application, the surface of the board material is coated with UV or PUR for surface brightness and haze treatment.

In some embodiments of the present application, a transparent protective layer is further provided above the thermosetting full-body layer, the material of the transparent protective layer being a thermosetting resin, a UV resin, or PUR.

In some embodiments of the present application, the abrasion-resistant powder is at least one of diamond powder, aluminum oxide, silicon dioxide, or glass powder.

In some embodiments of the present application, the board material comprising a thermosetting resin combined with a thermoplastic resin is made by any one of the following methods:
Method One: overlaying a thermoplastic color film on a thermoplastic substrate layer to form a board material having a thermoplastic pattern layer, then coating or laying a thermosetting resin material, and then performing heating or hot pressing treatment to form a thermosetting protective layer;
Method Two: distributing thermosetting resin materials of different colors on a thermoplastic substrate layer using a distributing machine, and then performing heating or hot pressing treatment to form a thermosetting full-body layer having a full-body pattern; or
Method Third: distributing a thermoplastic resin material to form a thermoplastic substrate layer blank having a single color or a full-body texture, then distributing a thermosetting resin material on the thermoplastic substrate layer blank, and performing heating or hot pressing treatment to obtain a board material having a thermoplastic substrate layer as a lower layer and a thermosetting full-body layer as an upper layer.

In some embodiments of the present application, when performing the heating or hot pressing treatment, a periphery of the position of the thermoplastic substrate layer is fixed by a fixing frame to prevent deformation of the thermoplastic substrate layer upon being heated.

In some embodiments of the present application, the hot pressing is performed using one of steel belt calendering, roller rolling, or steel plate flattening. Further, a steel belt used for the steel belt calendering, a roller used for the roller rolling, and a steel plate used for the steel plate flattening may be provided with textures on surfaces thereof, such that textures are formed on the surface of the board material during hot pressing. The textures may be made to register with the pattern of the thermoplastic pattern layer or the thermosetting full-body layer.

In some embodiments of the present application, the thermosetting resin material is in powder, paste or liquid form. In Method One, the thermoplastic pattern layer may be dusted with the thermosetting resin material in powder form, or coated with the thermosetting resin material in liquid form. In Method Two, the thermosetting resin material in powder form may be distributed to form an approximate full-body pattern, and then the thermosetting resin material in liquid form is applied by means of spray coating to refine details.

In some embodiments of the present application, the thermoplastic substrate layer is a formed flat plate, or a substrate layer obtained by laying particulate thermoplastic resin materials. When the thermoplastic substrate layer is a flat plate, the thermosetting resin material is directly disposed on the surface of the flat plate and is cured by means of heating or hot pressing. When the thermoplastic substrate layer is a substrate layer obtained by laying particulate thermoplastic resin materials, after the thermoplastic substrate layer has been laid, the thermosetting resin material is disposed on the thermoplastic substrate layer and integrally formed thereto by means of hot pressing.

The embodiments according to the present application at least have the following beneficial effects:
By using a thermoplastic material as a substrate and selecting a thermosetting resin as a surface layer, the present application incorporates the advantages of both thermoplastic resin and thermosetting resin, thereby solving the problem of material recovery, and at the same time addressing the issue of surface scratch resistance. It has been experimentally demonstrated that thermoplastic material and thermosetting material which are directly thermally compounded have good interlayer compatibility. The process involves directly disposing a thermosetting resin on the surface of the pattern layer, or directly distributing a thermosetting resin material on the thermoplastic substrate layer (single color or full-body). Using a thermosetting full-body layer to replace the pattern layer and the abrasion-resistant layer eliminates the need to additionally prepare impregnated paper, and achieves simpler processes and lower costs, as compared with conventional melamine-impregnated paper.

### BRIEF DESCRIPTION OF THE DRAWINGS

Fig. 1 is a schematic diagram of a board material comprising a thermosetting resin combined with a thermoplastic resin according to one embodiment of the present application; and
Fig. 2 is a schematic diagram of a board material comprising a thermosetting resin combined with a thermoplastic resin according to another embodiment of the present application.

Reference numerals: thermoplastic substrate layer 101, thermoplastic pattern layer 102, thermosetting protective layer 103, thermosetting full-body layer 104.

### DETAILED DESCRIPTION OF THE INVENTION

The concept and technical effects of the present application will be clearly and completely described below in conjunction with examples, such that the objects, features and effects of the present application can be fully understood. It is clear that the described examples are merely some, but not all, of the examples of the present application, and other examples obtained by those skilled in the art based on the described examples of the present application without requiring the exercise of inventive effort are all within the scope of the present application.

Examples of the present application will be described in detailed below. The described examples are exemplary and are only used to explain the present application, and should not be construed as limiting the present application.

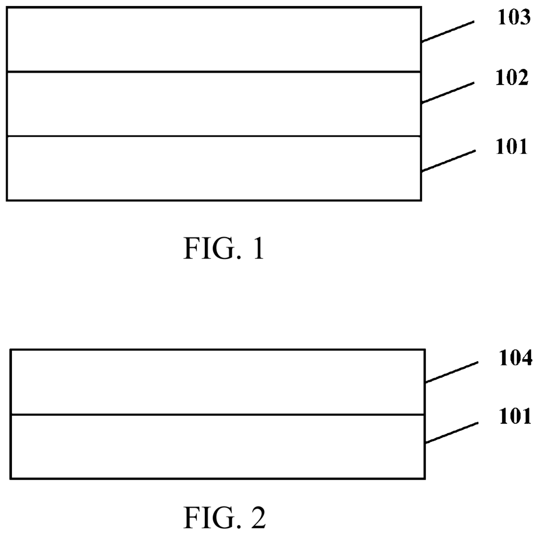

Referring to Fig. 1, which is a schematic diagram of a board material comprising a thermosetting resin combined with a thermoplastic resin according to one embodiment of the present application, the board material has the following structure: sequentially from bottom to top, a thermoplastic substrate layer 101, a thermoplastic pattern layer 102 and a thermosetting protective layer 103, the thermosetting protective layer 103 comprising an abrasion-resistant powder.

Referring to Fig. 2, which is a schematic diagram of a board material comprising a thermosetting resin combined with a thermoplastic resin according to another embodiment of the present application, the board material has the following structure: sequentially from bottom to top, a thermoplastic substrate layer 101 and a thermosetting full-body layer 104, the thermosetting full-body layer 104 being obtained by distributing thermosetting resin materials of different colors, the thermosetting full-body layer 104 comprising an abrasion-resistant powder, and the thermoplastic substrate layer 101 having a single color or having a full-body texture.

### Example 1

In this example, a board material comprising a thermosetting resin combined with a thermoplastic resin was prepared. The board material comprised, sequentially from bottom to top, a balancing layer, a PVC substrate layer, a PVC pattern layer and a polyester transparent protective layer. The polyester transparent protective layer comprised an abrasion-resistant powder added in an amount of 50 wt% of a polyester material. The formula of the PVC substrate layer was as shown in Table 1, and the formula of the polyester transparent protective layer was as shown in Table 2.

**Table 1 Formula of the PVC substrate layer**

| Ingredients | Content (%) |
|---|---|
| PVC | 24% |
| Calcium carbonate | 70% |
| Stabilizer + other auxiliary agents | 6% |

**Table 2 Formula of the polyester transparent protective layer**

| Polyester material | | |
|---|---|---|
| Ingredients | CAS | Content (%) |
| Polyester resin | 26123-45-5 | 55% |
| Curing agent | 126-30-7 | 25% |
| Silicon dioxide | 14808-60-7 | 15% |
| Auxiliary agent | - | 5% |
| Total | | 100% |
| Abrasion-resistant powder | | |
| Diamond powder | 7782-40-3 | 50% |

The specific preparation process was as follows: A PVC substrate layer was obtained by extrusion, and a PVC color film was affixed to the PVC substrate layer to form a pattern layer. Then, a polyester resin material was overlaid, and hot pressing treatment was performed at 175°C for 42 min to form a polyester transparent protective layer, thereby obtaining a board material comprising a thermosetting resin combined with a thermoplastic resin.

### Example 2

In this example, a board material comprising a thermosetting resin combined with a thermoplastic resin was prepared. The board material comprised, sequentially from bottom to top, a PVC substrate layer and a polyester full-body layer. The polyester full-body layer comprised an abrasion-resistant powder added in an amount of 50 wt% of a polyester material. The formula of the PVC substrate layer was the same as that of the PVC substrate layer in Example 1, and the formula of the polyester full-body layer was as shown in Table 3. Colored powders were added to the polyester resin material to obtain resin materials of different colors.

The specific preparation process was as follows: A PVC substrate layer was obtained by extrusion. A pattern was inputted into a distributing machine, and a controller controlled the discharge of polyester resin materials of different colors according to the pattern. The distributing machine distributed the polyester resin materials of different colors onto the PVC substrate layer to form the pattern. Then, hot pressing treatment was performed using a steel belt at 170°C to form a full-body layer having a full-body pattern.

**Table 3 Formula of the polyester full-body layer**

| Polyester material | | |
|---|---|---|
| Ingredients | CAS | Content (%) |
| Polyester resin | 26123-45-5 | 65% |
| Barium sulfate | 7727-43-7 | 15% |
| Silicon dioxide | 14808-60-7 | 15% |
| Benzoin | 119-53-9 | 1% |
| PE wax | 471-34-1 | 2% |
| Pigment | - | 2% |
| Total | | 100% |
| Abrasion-resistant powder | | |
| Diamond powder | 7782-40-3 | 50% |

### Example 3

In this example, a board material comprising a thermosetting resin combined with a thermoplastic resin was prepared. The board material comprised, sequentially from bottom to top, a PVC substrate layer and a polyester full-body layer. The polyester full-body layer comprised an abrasion-resistant powder added in an amount of 50 wt% of a polyester material. The formula of the polyester full-body layer was the same as that of the polyester full-body layer in Example 2.

The specific preparation process was as follows: Thermoplastic granules of different colors were placed in a distributing machine. A pattern was inputted into the distributing machine, and a controller controlled the distribution of the granules of different colors according to the pattern, to form a PVC substrate layer blank of a full-body pattern. Then, another distributing machine distributed polyester resin materials of different colors on the PVC substrate layer blank to form a polyester full-body layer blank. At the time, the PVC substrate layer blank and the polyester full-body layer blank had not fused to each other. Hot pressing treatment was then performed using a steel belt at 180°C, to form a board material having a thermoplastic substrate layer as a lower layer and a thermosetting full-body layer as an upper layer.

### Example 4

In this example, a board material comprising a thermosetting resin combined with a thermoplastic resin was prepared. The board material comprised, sequentially from bottom to top, a PVC substrate layer and an epoxy full-body layer. The epoxy full-body layer comprised an abrasion-resistant powder added in an amount of 30 wt% of an epoxy material. The formula of the epoxy full-body layer was as shown in Table 4.

The specific preparation process was as follows: Epoxy resin granules of different colors were placed in a distributing machine. A pattern was inputted into the distributing machine, and a controller controlled the distribution of the granules of different colors on a PVC substrate according to the pattern. Hot pressing treatment was then performed using a steel belt at 180°C to form an epoxy full-body layer.

**Table 4 Formula of the epoxy full-body layer**

| Epoxy material | | |
|---|---|---|
| Ingredients | CAS | Content (%) |
| Epoxy resin | 25068-38-6 | 52% |
| Curing agent | 2530-83-8 | 30% |
| Silicon dioxide | 14808-60-7 | 10% |
| Pigment | - | 5% |
| Leveling agent | 9003-08-1 | 3% |
| Total | | 100% |
| Abrasion-resistant powder | | |
| Diamond powder | 7782-40-3 | 30% |

### Comparative Example 1

In this comparative example, a conventional PVC board material was prepared. The conventional PVC board material differed from Example 1 in that a UV layer was disposed on the surface instead of the polyester transparent protective layer. The specific process was as follows:
A PVC substrate layer was obtained by extrusion, and a PVC color film was attached to the PVC substrate layer to form a pattern layer. After protection using a transparent layer (that is, an abrasion-resistant layer), a UV coating was further applied. After curing, a UV protective layer was formed, thus obtaining a conventional PVC board material.

**Table 5 Comparison of the performances of the Examples and the Comparative Example**

| Performance indexes | Thickness of the surface thermosetting layer | Deep scratch resistance | Abrasion resistance |
|---|---|---|---|
| Test methods/standards | - | ASTM D336, ISO 15184, ISO 4586-2 | EN 13329:2006+A1:2008 |
| Example 1 | 0.3 mm | 2400 GF (gram-force) | 9500 rotations or higher, grade: AC6 |
| Example 2 | 0.20 mm | 2400 GF (gram-force) | 9500 rotations or higher, grade: AC6 |
| Example 3 | 0.16 mm | 2400 GF (gram-force) | 9500 rotations or higher, grade: AC6 |
| Example 4 | 0.28 mm | 2800 GF (gram-force) | 9500 rotations or higher, grade: AC6 |
| Comparative Example 1 | 0.5 mm (transparent layer + UV layer) | 2200 GF (gram-force) | 5600 rotations, grade: AC4 |

The examples of the present application have been described in detail above, but the present application is not limited to the described examples. Various changes can be made within the scope of knowledge of those of ordinary skill in the art without departing from the scope of protection of the present application. In addition, the examples of the present application and the features in the examples may be combined with each other, provided there is no conflict with each other.

## Claims

1. A board material comprising a thermosetting resin combined with a thermoplastic resin, **characterized by** having any one of the following structures:
(1) sequentially from bottom to top, a thermoplastic substrate layer, a thermoplastic pattern layer and a thermosetting protective layer, the thermosetting protective layer comprising an abrasion-resistant powder; or
(2) sequentially from bottom to top, a thermoplastic substrate layer and a thermosetting full-body layer, the thermosetting full-body layer being obtained by distributing thermosetting resin materials of different colors, the thermosetting full-body layer comprising an abrasion-resistant powder, and the thermoplastic substrate layer having a single color or having a full-body texture.

2. The board material comprising a thermosetting resin combined with a thermoplastic resin according to claim 1, wherein the raw materials of the thermoplastic substrate layer comprise a thermoplastic resin and a filler, the thermoplastic resin being at least one of PVC, PP, PETG, PET, or TPU.

3. The board material comprising a thermosetting resin combined with a thermoplastic resin according to claim 1, wherein a main raw material of the thermosetting protective layer and the thermosetting full-body layer is a thermosetting resin, the thermosetting resin being a phenolic resin, a urea-formaldehyde resin, melamine, an unsaturated polyester resin, an epoxy resin, a silicone resin, or polyurethane.

4. The board material comprising a thermosetting resin combined with a thermoplastic resin according to claim 3, wherein the raw materials of the thermosetting protective layer and the thermosetting full-body layer further comprise a curing agent and an auxiliary agent.

5. The board material comprising a thermosetting resin combined with a thermoplastic resin according to claim 1, wherein one or both of a balancing layer or a silencing layer are further provided below the thermoplastic substrate layer.

6. The board material comprising a thermosetting resin combined with a thermoplastic resin according to claim 1, wherein a transparent protective layer is further provided above the thermosetting full-body layer, the material of the transparent protective layer being a thermosetting resin, a UV resin, or PUR.

7. The board material comprising a thermosetting resin combined with a thermoplastic resin according to claim 1, wherein the abrasion-resistant powder is at least one of diamond powder, aluminum oxide, silicon dioxide, or glass powder.

8. The board material comprising a thermosetting resin combined with a thermoplastic resin according to claim 1, wherein the board material comprising a thermosetting resin combined with a thermoplastic resin has the following structure: sequentially from bottom to top, a thermoplastic substrate layer, a thermoplastic pattern layer and a thermosetting protective layer, the thermosetting protective layer comprising an abrasion-resistant powder,
the board material comprising a thermosetting resin combined with a thermoplastic resin is made by the following method:
overlaying a thermoplastic color film on a thermoplastic substrate layer to form a board material having a thermoplastic pattern layer, then coating or laying a thermosetting resin material, and performing heating or hot pressing treatment to form a thermosetting protective layer.

9. The board material comprising a thermosetting resin combined with a thermoplastic resin according to claim 1, wherein the board material comprising a thermosetting resin combined with a thermoplastic resin has the following structure: sequentially from bottom to top, a thermoplastic substrate layer and a thermosetting full-body layer, the thermosetting full-body layer being obtained by distributing thermosetting resin materials of different colors, the thermosetting full-body layer comprising an abrasion-resistant powder, and the thermoplastic substrate layer having a single color or having a full-body texture;
the board material comprising a thermosetting resin combined with a thermoplastic resin is made by any one of the following methods:
Method One: distributing thermosetting resin materials of different colors on a thermoplastic substrate layer using a distributing machine, and then performing heating or hot pressing treatment to form a thermosetting full-body layer having a full-body pattern; or
Method Two: distributing a thermoplastic resin material to form a thermoplastic substrate layer blank having a single color or a full-body texture, then distributing a thermosetting resin material on the thermoplastic substrate layer blank, and performing heating or hot pressing treatment to obtain a board material having a thermoplastic substrate layer as a lower layer and a thermosetting full-body layer as an upper layer.

10. The board material comprising a thermosetting resin combined with a thermoplastic resin according to claim 8 or 9, wherein, when performing the heating or hot pressing treatment, a periphery of the position of the thermoplastic substrate layer is fixed by a fixing frame, to prevent deformation of the thermoplastic substrate layer upon being heated.

11. The board material comprising a thermosetting resin combined with a thermoplastic resin according to claim 8 or 9, wherein the hot pressing is performed using one of steel belt calendering, roller rolling, or steel plate flattening.
